# EUROPÄISCHE PATENTSCHRIFT

(11) **EP 1 311 424 B1**
(45) Veröffentlichungstag und Bekanntmachung des Hinweises auf die Patenterteilung: **04.02.2004**
(21) Anmeldenummer: 01962621.7
(22) Anmeldetag: 09.08.2001
(51) Int. Cl.: B62D 65/00

(54) **FERTIGUNGSSTRASSENABSCHNITT**
PRODUCTION LINE SECTION
SECTION DE CHAINE DE PRODUCTION

(30) Priorität: 22.08.2000 DE 20014503 U
(43) Veröffentlichungstag der Anmeldung: 21.05.2003
(73) Patentinhaber: SIEMENS AKTIENGESELLSCHAFT, 80333 München (DE)
(72) Erfinder: ACKERMANN, Peter, 38118 Braunschweig (DE); HALUPKA, Rolf, 07334 Kamsdorf (DE); WOLPERS, Dirk, 29413 Diesdorf-Waddekath (DE); ZIERMANN, Horst, 07407 Rudolstadt (DE)
(86) Internationale Anmeldenummer: PCT/DE2001/003051
(87) Internationale Veröffentlichungsnummer: WO 2002/016192

(56) Entgegenhaltungen:
- US-A- 4 796 346
- US-A- 4 937 929
- US-A- 5 282 524
- PATENT ABSTRACTS OF JAPAN vol. 1995, no. 09, 31. Oktober 1995 (1995-10-31) -& JP 07 165142 A (MITSUBISHI MOTORS CORP), 27. Juni 1995 (1995-06-27)

## Beschreibung

Die Erfindung bezieht sich auf einen Fertigungsstraßenabschnitt mit einer Fördereinrichtung, mittels der ein Tragrahmen bzw. Skid in Förderrichtung durch den Fertigungsstraßenabschnitt förderbar ist, einer Hub/Senkeinrichtung, mittels der der im Fertigungsstraßenabschnitt befindliche Tragrahmen bzw. Skid in Vertikalrichtung verstellbar ist, und einer Feinpositioniereinrichtung, mittels der der Tragrahmen bzw. Skid an der Hub/Senkeinrichtung positionierbar ist. Ein solcher Fertigungsstraßenabschnitt ist aus der US 4 937 929 A bekannt.

Eine Vielzahl derartiger Fertigungsstraßenabschnitte bildet üblicherweise eine Fertigungsstraße, in deren Verlauf an einem Gegenstand, beispielsweise eine Karosserieteil, das im Tragrahmen bzw. Skid fixiert ist, unterschiedliche Bearbeitungsvorgänge vorgenommen werden. Hierbei wird der das Karosserieteil in fixierter Position enthaltende Tragrahmen bzw. Skid in Förderrichtung der Fertigungsstraße aufeinanderfolgende durch die nebeneinander angeordneten Fertigungsstraßenabschnitte gefördert.

Der Erfindung liegt die Aufgabe zugrunde, einen Fertigungsstraßenabschnitt der vorstehend genannten Art zu schaffen, bei dem sichergestellt ist, dass bei Aktivierung von Sicherheitseinrichtungen, -schaltern, -elementen od.dgl. in jedem Fall eine Weiterförderung eines Tragrahmens bzw. Skids von einem Fertigungsstraßenabschnitt zu einem darauffolgenden Fertigungsstraßenabschnitt verhindert wird.

Diese Aufgabe wird erfindungsgemäß dadurch gelöst, dass am eingangs geschilderten Fertigungsstraßenabschnitt eine Stoppereinrichtung vorgesehen ist, die zwischen einer Ruhestellung, in der der Tragrahmen bzw. Skid in Förderrichtung des Fertigungsstraßenabschnitts förderbar ist, und einer Betriebsstellung verstellbar ist, in der eine Bewegung des Tragrahmens bzw. Skids in Förderrichtung des Fertigungsstraßenabschnitts blockiert ist. Diese Stoppereinrichtung ist in geeigneter Weise mit den vorhandenen Sicherheitseinrichtungen, -schaltern, -elementen ud.dgl. zu verbinden, so dass bei einer entsprechenden Situation in jedem Fall gewährleistet werden kann, dass die Stoppereinrichtung in ihrer eine Bewegung des Tragrahmens bzw. Skids in Förderrichtung des Fertigungsstraßenabschnitts blockierenden Betriebsstellung ist.

Hierzu weist die Stoppereinrichtung vorteilhaft einen Anschlag auf, der in Betriebsstellung der Stoppereinrichtung in den Förderweg des Tragrahmens bzw. Skids durch den Fertigungsstraßenabschnitt vorragt und in Ruhestellung der Stoppereinrichtung außerhalb dieses Förderwegs angeordnet ist. Hierdurch kann in einfacher mechanischer Weise eine etwaige Bewegung des Tragrahmens bzw. Skids in Förderrichtung des Fertigungsstraßenabschnitts sicher unterbunden werden.

Gemäß einer zweckmäßigen Weiterbildung der Erfindung ist die Stoppereinrichtung am in Förderrichtung des Tragrahmens bzw. Skids durch den Fertigungsstraßenabschnitt stromabwärtigen Endabschnitt des Fertigungsstraßenabschnitts angeordnet. Der Anschlag der Stoppereinrichtung ist vorteilhaft zwischen seiner Betriebsstellung und seiner Ruhestellung in Vertikalrichtung bewegbar.

Zur Dämpfung etwaiger Aufprallenergien ist es zweckmäßig, wenn der Anschlag auf seiner Anschlagfläche zumindest einen Anschlagpuffer aufweist.

Der Anschlagpuffer kann in mechanisch-konstruktiv einfacher Weise auf der Anschlagfläche des Anschlags angeordnet werden, wenn er einen Verbindungsabschnitt, vorzugsweise einen Gewindeschaft, aufweist, der in einem anschlagseitigen Verbindungsmittel, vorzugsweise einer Gewindeausnehmung, fixierbar ist.

Die vertikale Verstellbarkeit des Anschlags lässt sich in wenig aufwendiger Weise realisieren, wenn der Anschlag auf zumindest einer, vorzugsweise beiden Seitenflächen einen seitlich vorragenden Mitnehmerzapfen aufweist, der an einem Stellglied anliegt, mittels dem der Anschlag zwischen seiner Ruhe- und seiner Betriebsstellung verstellbar ist.

Die Bewegung des Stellglieds erfolgt zweckmäßigerweise um einen Schwenkbolzen, um den das Stellglied zwischen seiner der Ruhestellung des Anschlags und seiner der Betriebsstellung des Anschlags entsprechenden Position verschwenkbar ist.

Zur Stoppereinrichtung gehört vorteilhaft ein Antriebsglied, mittels dem der Anschlag zwischen seiner Ruhe- und seiner Betriebsstellung verstellbar ist, wobei das Antriebsglied der Stoppereinrichtung zweckmäßigerweise als doppelt wirkender Fluidzylinder ausgebildet werden kann.

Der Fluidzylinder weist gemäß einer weiteren Ausbildung der Erfindung einen Stellkolben auf, der an seinem freien Ende mit dem Stellglied der Stoppereinrichtung verbunden ist.

Wenn das freie Ende des Stellkolbens des Fluidzylinders verschwenkbar mit einem Ende eines Kurbelhebels verbunden ist, der an seinem anderen Ende fest mit dem Stellglied verbunden und verschwenkbar um den Schwenkbolzen gelagert ist, kann die Bewegung des Stellglieds zwischen dessen der Betriebsstellung des Anschlags und dessen der Ruhestellung des Anschlags entsprechenden Position in exakter Weise realisiert werden.

Hierzu ist vorteilhaft der Fluidzylinder an seinem seinem Stellkolben abgewandten Ende verschwenkbar gelagert.

Um die Stoppereinrichtung zur dämpfenden Aufnahme der bei einem etwaigen Aufprall eines Skids bzw. Tragrahmens gegen den Anschlag entstehenden Aufprallenergie möglichst flexibel zu gestalten, ist jeder Mitnehmerzapfen des Anschlags in einer ihm zugeordneten, sich in Betriebsstellung des Anschlags in Förderrichtung des Fertigungsstraßenabschnitts erstreckenden Führungsbahn des Stellglieds aufgenommen, wobei der Anschlag um den bzw. die in der Führungsbahn bzw. den Führungsbahnen befindlichen Mitnehmerzapfen schwenkbar und in Längsrichtung der Führungsbahn bzw. Führungsbahnen verschieblich ist. Hierdurch kann durch die Bewegungsmöglichkeiten des Anschlags in bezug auf das Stellglied die Aufprallenergie gedämpft werden.

Um zu verhindern, dass bei einem Aufprall oder bei einer Verstellung des Anschlags aus dessen Betriebs- in dessen Ruhestellung die anschlagseitigen Mitnehmerzapfen außer Eingriff mit den Führungsbahnen geraten, weist vorteilhaft jede Führungsbahn an ihrem in Förderrichtung des Fertigungsstraßenabschnitts stromabwärtigen Ende eine Anschlagwand auf.

Des weiteren weist die Stoppereinrichtung vorteilhaft einen Stoßdämpfer auf, mittels dem einer Schwenkbewegung des Anschlags um dessen Mitnehmerzapfen, die bei einem Aufprall eines Tragrahmens bzw. Skids gegen den Anschlag entsteht, entgegenwirkbar ist.

Der Stoßdämpfer der Stoppereinrichtung ist vorteilhaft an einem mitnehmerzapfenfernen Endabschnitt eines sich über den bzw. die Mitnehmerzapfen des Anschlags erstreckenden Vorsprungabschnitts des Anschlags angeordnet.

Hierbei kann der Stoßdämpfer der Stoppereinrichtung zweckmäßigerweise als pneumatischer Stoßdämpfer ausgebildet sein.

Des weiteren ist die Stoppereinrichtung vorteilhaft mit einem Endschalter versehen, der bei einer Verstellung des Anschlags aus dessen Ruhe- in dessen Betriebsstellung mit einem anschlagseitigen Eingriffsteil in Eingriff bringbar und mittels dem eine Verschwenkung und eine Verschiebung des Anschlags begrenzbar sind.

Durch die vorstehend geschilderte Stoppereinrichtung können auch bei einem Aufprall eines Tragrahmens bzw. Skids auf den Anschlag Verhältnisse geschaffen werden, bei denen eine verformungsfreie Aufnahme der bei dem Aufprall entstehenden Kräfte gewährleistet werden kann.

Zur wenig aufwendigen und dennoch korrekten Positionierung des Tragrahmens bzw. Skids am Fertigungsstraßenabschnitt ist es vorteilhaft, wenn die Feinpositioniereinrichtung des Fertigungsstraßenabschnitts zumindest eine Positioniereinheit des Fertigungsstraßenabschnitts aufweist, die in einer festen räumlichen Anordnung am Fertigungsstraßenabschnitt vorgesehen ist und ein Positionierelement aufweist, das zwischen einer Betriebsstellung, in der es mit dem im Fertigungsstraßenabschnitt befindlichen Tragrahmen bzw. Skid in Eingriff ist, und einer Ruhestellung, in der es außer Eingriff mit dem im Fertigungsstraßenabschnitt befindlichen Tragrahmen bzw. Skid ist, verstellbar ist.

Dieses Positionierelement kann zweckmäßigerweise als Positionierdorn mit einem sich in Richtung auf sein freies Ende gleichmäßig verkleinerten Querschnitt ausgebildet sein. Hierdurch ist eine weitgehend stoßfreie Schaffung des Eingriffs zwischen der Positioniereinheit und dem Tragrahmen bzw. Skid realisierbar.

Vorteilhaft weist der Positionierdorn an seinem proximalen Endabschnitt einen Querschnitt auf, der dem Querschnitt einer Positionierausnehmung des Tragrahmens bzw. Skids entspricht, mit der der Positionierdorn bei seiner Verstellung aus seiner Ruhe- in seine Betriebsstellung in Eingriff bringbar ist. Während der genannten Verstellung des Positionierdorns wird somit allmählich eine korrekte Positionierung des Tragrahmens bzw. Skids in bezug auf den Fertigungsstraßenabschnitt bzw. dessen Hub/Senkeinrichtung realisiert, wobei ruckartige Bewegungen des Tragrahmens bzw. Skids verhindert werden.

Eine konstruktiv-technisch wenig aufwendige und dennoch zuverlässige Ausgestaltung der Positioniereinheit wird erreicht, wenn der Positionierdorn auf der Oberseite einer Plattform angeordnet ist, die ihrerseits zwischen der Betriebs- und der Ruhestellung der Positioniereinheit verstellbar ist.

Zur korrekten räumlichen Positionierung des Positionierdorns bzw. der Plattform der Positioniereinheit in bezug auf den Fertigungsstraßenabschnitt ist es zweckmäßig, wenn auf der Unterseite der Plattform der Positioniereinheit vorzugsweise zwei Führungszylinder angeordnet sind, die sich in Vertikalrichtung erstrecken und in einem am Fertigungsstraßenabschnitt fixierten Führungsblock geführt sind.

Zur Endlagerkontrolle der Positioniereinheit ist an einer Längsseite der Plattform der Positioniereinheit zweckmäßigerweise ein Winkelanschlag angebracht, dessen freier Endabschnitt so ausgebildet ist, dass ein berührungsloser Endschalter diesen Endabschnitt sicher erkennt und eine Meldung an eine externe Steuerung signalisiert.

Es hat sich als vorteilhaft erwiesen, wenn die Feinpositioniereinrichtung mehrere, vorzugsweise zwei, Positioniereinheiten aufweist, wobei jeweils eine Positioniereinheit im Bereich einer Ecke des Fertigungsstraßenabschnitts angeordnet werden kann.

Im folgenden wird die Erfindung an Hand einer Ausführungsform unter Bezugnahme auf die Zeichnung näher erläutert. Es zeigen:
- FIG 1: eine Prinzipdarstellung eines erfindungsgemäßen Fertigungsabschnitts mit im Fertigungsabschnitt befindlichen Tragrahmen bzw. Skid in Draufsicht;
- FIG 2: eine Prinzipdarstellung einer Feinpositioniereinrichtung des erfindungsgemäßen Fertigungsstraßenabschnitts;
- FIG 3: eine Prinzipdarstellung einer Stoppereinrichtung des erfindungsgemäßen Fertigungsstraßenabschnitts;
- FIG 4: eine Prinzipdarstellung einer Fördereinrichtung und einer Hub/Senkeinrichtung des erfindungsgemäßen Fertigungsstraßenabschnitts;
- FIG 5: ein Tragrahmen bzw. Skid in Draufsicht;
- FIG 6: eine teilweise geschnittene Seitenansicht der Stoppereinrichtung des erfindungsgemäßen Fertigungsabschnitts;
- FIG 7: eine Draufsicht auf die in FIG 6 dargestellte Stoppereinrichtung;
- FIG 8: eine Vorderansicht der in den FIGUREN 6 und 7 dargestellten Stoppereinrichtung;
- FIG 9: eine Prinzipdarstellung der Stoppereinrichtung des erfindungsgemäßen Fertigungsstraßenabschnitts in ihrer Ruhestellung;
- FIG 10: eine Prinzipdarstellung der Stoppereinrichtung des erfindungsgemäßen Fertigungsstraßenabschnitts in ihrer Betriebsstellung;
- FIG 11: eine Prinzipdarstellung der Stoppereinrichtung des erfindungsgemäßen Fertigungsstraßenabschnitts in ihrer durch einen Aufprall verschwenkten Position;
- FIG 12: eine Seitenansicht einer Positioniereinheit der Feinpositioniereinrichtung des erfindungsgemäßen Fertigungsstraßenabschnitts; und
- FIG 13: eine Vorderansicht der in FIG 12 gezeigten Positioniereinheit.

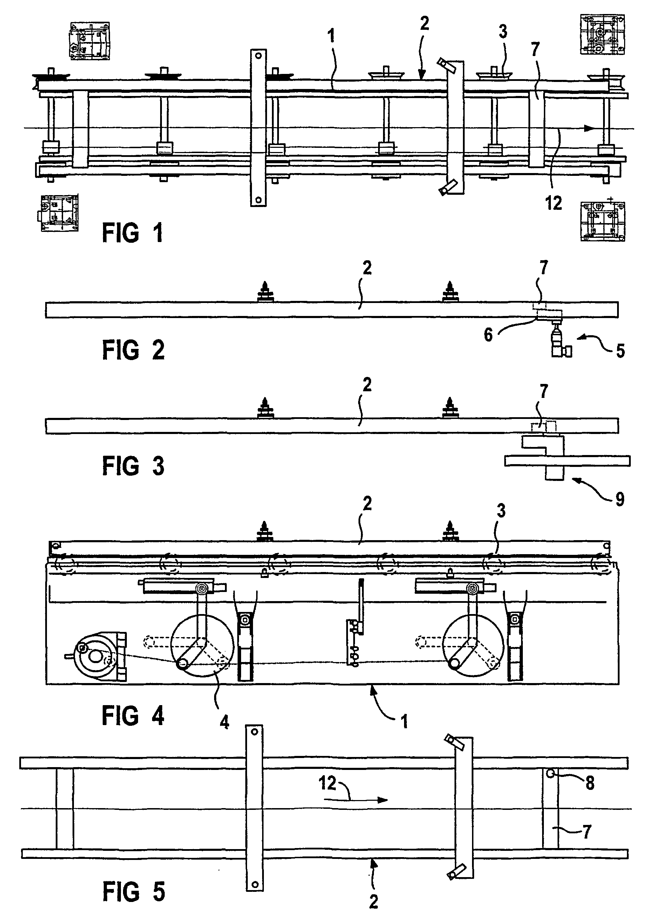

Ein in FIG 1 gezeigter erfindungsgemäßer Fertigungsstraßenabschnitt 1 bildet einen modulartigen Bestandteil einer eine Vielzahl derartiger Fertigungsabschnitte 1 aufweisenden Fertigungsstraße, wobei an aufeinanderfolgenden Fertigungsabschnitten 1 unterschiedliche Bearbeitungsvorgänge vorgenommen werden.

Hierzu wird dem Fertigungsabschnitt 1 bzw. nacheinander den Fertigungsabschnitten 1 der im übrigen in den Figuren nicht dargestellten Fertigungsstraße ein Tragrahmen bzw. Skid 2 zugeführt, in dem in geeigneter Weise ein am Fertigungsstraßenabschnitt 1 zu bearbeitender Gegenstand, beispielsweise eine Fahrzeugkarosserie, fixiert ist. Dieser Tragrahmen bzw. Skid 2 mit der an ihm fixierten Fahrzeugkarosserie durchwandert nacheinander die aufeinanderfolgenden Fertigungsabschnitte 1 der Fertigungsstraße.

Zur Beförderung des Tragrahmens bzw. Skids 2 durch die Fertigungsstraße weist jeder Fertigungsstraßenabschnitt 1 eine Fördereinrichtung 3 auf, die im dargestellten Ausführungsbeispiel als Rollenbahn ausgebildet ist.

Um am in FIG 1 gezeigten Fertigungsstraßenabschnitt 1 Bearbeitungsvorgänge an dem im Tragrahmen bzw. Skid 2 fixierten Karosserieteil vornehmen zu können, muss der Tragrahmen bzw. Skid 2 in bezug auf den Fertigungsstraßenabschnitt exakt positioniert und fixiert werden. Dann kann der Tragrahmen bzw. Skid 2 mittels einer in FIG 4 im Prinzip dargestellten Hub/Senkeinrichtung beliebig in Vertikalrichtung positioniert werden, wobei eine vertikale Positionierung entsprechend dem beabsichtigten Bearbeitungsvorgang möglich ist.

Zur korrekten Feinpositionierung des Tragrahmens bzw. Skids 2 am Fertigungsstraßenabschnitt 1 vor der Fixierung des Tragrahmens bzw. Skids 2 am Fertigungsstraßenabschnitt 1 weist letzterer eine Feinpositioniereinrichtung 5 auf, die ein zwischen einer Ruhe- und einer Betriebsstellung verstellbares Positionierelement 6 aufweist, welches zur exakten Positionierung des Tragrahmens bzw. Sikds 2 am Fertigungsstraßenabschnitt 1 mit einer in einer in FIG 5 vorderen Quertraverse 7 des Tragrahmens bzw. Skids 2 ausgebildeten Positionierausnehmung 8 in Eingriff bringbar ist.

Um in jedem Fall zu vermeiden, dass ein Tragrahmen bzw. Skid 2 ungewollt bzw. irrtümlich von einem Fertigungsstraßenabschnitt 1 zum nächsten Fertigungsstraßenabschnitt 1 der Fertigungsstraße gefördert wird, weist jeder Fertigungsstraßenabschnitt 1 eine in FIG 3 im Prinzip dargestellte Stoppereinrichtung 9 auf, die in geeigneter im einzelnen nicht beschriebener Weise mit Sicherungselementen bzw. -schaltern verbunden ist und durch die so sichergestellt werden kann, dass ein Tragrahmen bzw. Skid bei Aktivierung der genannten Sicherheitselemente bzw. -schalter nicht aus dem einen Fertigungsstraßenabschnitt 1 in den nächsten Fertigungsstraßenabschnitt 1 der Fertigungsstraße gefördert werden kann.

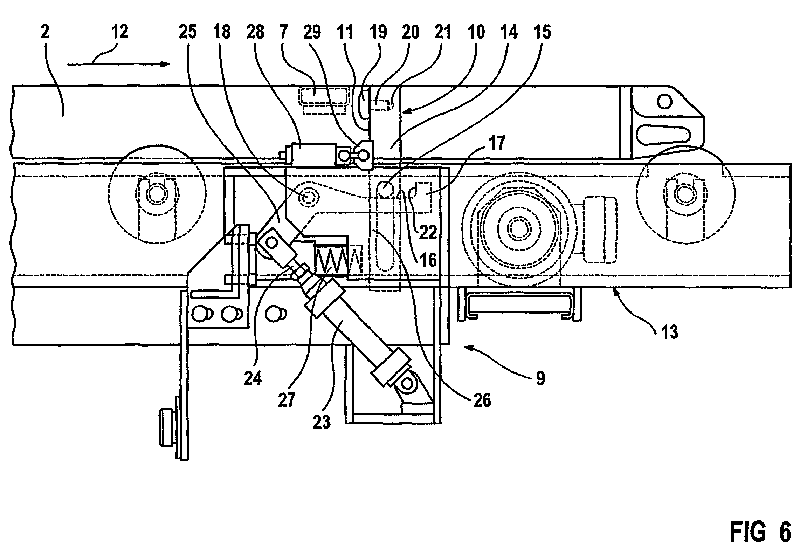

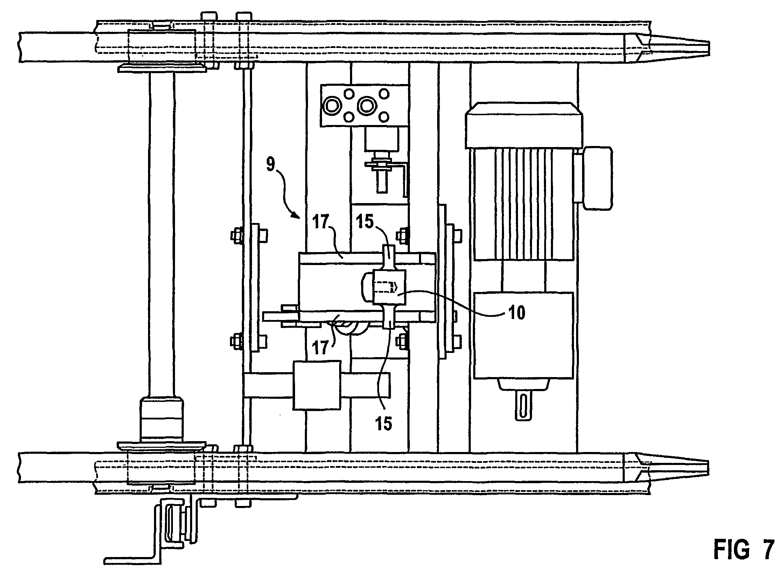

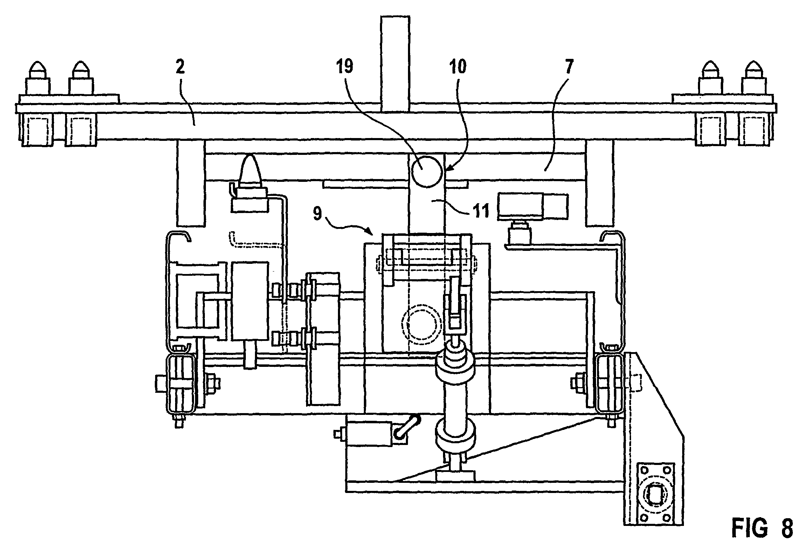

Hierzu weist die Stoppereinrichtung 9 einen Anschlag 10 auf, der bei dem Ausführungsbeispiel, wie es in den FIG 6 bis 8 eingehend dargestellt ist, einen im wesentlichen rechteckigen Querschnitt aufweist. Der Anschlag 10 hat eine Anschlagfläche 11, die einem sich in Förderrichtung 12 der Fertigungsstraße nähernden Tragrahmen bzw. Skid 2' zugewandt ist.

Die Stoppereinrichtung 9 ist im Bereich eines stromabwärtigen Endabschnitts 14 des Fertigungsstraßenabschnitts 1 angeordnet.

Wenn der Tragrahmen bzw. Skid 2 innerhalb des Fertigungsstraßenabschnitts 1 grob vorpositioniert ist, gerät eine Vorderfläche der Quertraverse 7 des Tragrahmens bzw. Skids 2 in Gegenüberlage bzw. Anlage gegen die Anschlagfläche 11 des Anschlags 10 der Stoppereinrichtung 9, wenn sich deren Anschlag 10 in Betriebsstellung befindet.

Der Anschlag 10 der Stoppereinrichtung 9 weist an seinen beiden Seitenflächen 14 jeweils einen Mitnehmerzapfen 15 auf, wobei jeder Mitnehmerzapfen 15 in einer Führungsbahn 16 eines Stellglieds 17 geführt ist, das um einen Schwenkbolzen 18 in einem vorgegebenen Bereich schwenkbar ist. Durch Schwenkung des Stellglieds 17 und eine daraus resultierende räumliche Versetzung der Mitnehmerzapfen 15 des Anschlags 10 ist die Stoppereinrichtung 9 bzw. der Anschlag 10 aus der Betriebsin die Ruhestellung bzw. umgekehrt verstellbar.

Auf seiner Anschlagfläche 11 weist der Anschlag 10 in dem Niveau, in dem ein Aufprall der Vorderfläche der Quertraverse 7 des Tragrahmens bzw. Skids 2 erfolgt, einen Anschlagpuffer 19 auf, der zumindest teilweise aus einem dämpfenden, elastischen Werkstoff hergestellt ist. Der Anschlagpuffer 19 hat einen Gewindeschaft 20, der in eine in der Anschlagfläche 11 des Anschlags 10 ausgebildete Gewindeausnehmung 21 einschraubbar ist.

Das Stellglied 17 ist in Betriebsstellung der Stoppereinrichtung 9 so angeordnet, dass sich die Führungsbahn 16 des Stellglieds 17 etwa in Förderrichtung 12 des Fertigungsabschnitts 1 erstreckt. An ihrem in Förderrichtung 12 gesehen stromabwärtigen Ende ist die Führungsbahn 12 mit einer Anschlagwand 22 versehen.

Jeder Mitnehmerzapfen 15 des Anschlags 10 ist in der ihm zugeordneten Führungsbahn 16 so aufgenommen, dass der Anschlag 10 sowohl um seinen Mitnehmerzapfen 15 schwenkbar als auch in Förderrichtung 12 in bezug auf die Führungsbahn 16 verschieblich ist, wenn die Quertraverse 7 des Tragrahmens bzw. Skids 2 gegen die Anschlagfläche 11 des Anschlags 10 stößt.

Zur Verstellung des Stellglieds 17 aus dessen der Betriebsstellung des Anschlags 10 entsprechenden Position und dessen der Ruhestellung des Anschlags 10 entsprechenden Position ist ein Antriebsglied der Stoppereinrichtung in Form eines Fluidzylinders 23 vorgesehen, der einen Stellkolben 24 aufweist, der an seinem freien Ende mit einem Ende eines Kurbelhebels 25 verschwenkbar verbunden ist, dessen anderes Ende im Bereich des Schwenkbolzens 18 fest mit dem Stellglied 17 verbunden und entsprechend um den Schwenkbolzen 18 verschwenkbar ist.

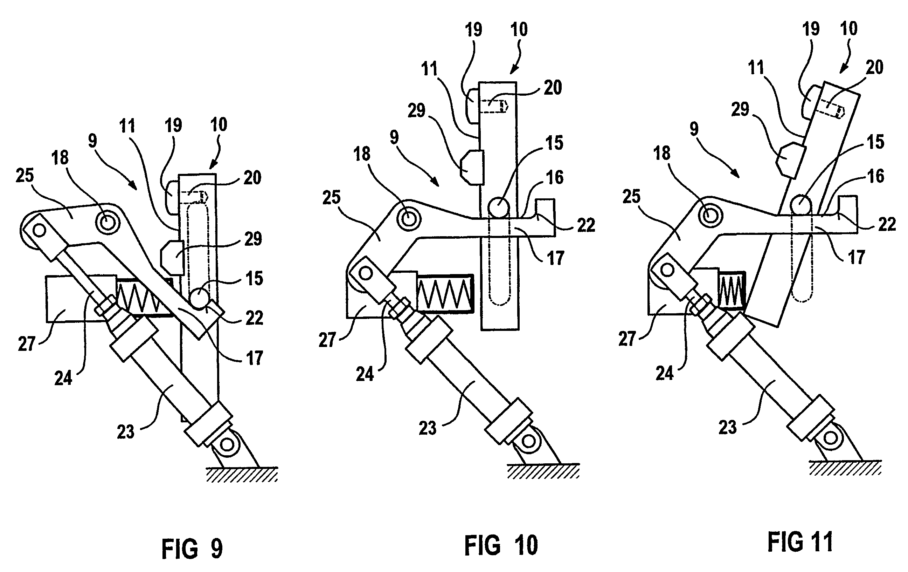

Zur Verstellung des Stellglieds 17 aus seiner der Betriebsstellung des Anschlags 10 entsprechenden, in FIG 6 gezeigten Position in dessen der Ruhestellung des Anschlags 10 entsprechenden Position wird durch entsprechende Fluidbeaufschlagung des Fluidzylinders 23 der Stellkolben 24 aus dem Fluidzylinder 23 ausgefahren, wodurch der Kurbelhebel 25 aus der in FIG 6 gezeigten Position in eine in FIG 9 dargestellte Position gerät, in der seine Längsachse etwa parallel zur Förderrichtung 12 angeordnet ist. Bei dieser Bewegung wird der Kurbelhebel 25 in Uhrzeigerrichtung um den Schwenkbolzen 18 geschwenkt, was zu einer entsprechenden, im Uhrzeigersinn erfolgenden Verschwenkung des Stellglieds 17 um den Schwenkbolzen 18 führt. Bei dieser Verschwenkung des Stellglieds 17 wandert die Führungsbahn 16 des Stellglieds 17 und in der Führungsbahn 16 der Mitnehmerzapfen 15 des Anschlags 10 in FIG 6 abwärts. Hierdurch wird der Anschlag 10 insgesamt in Vertikalrichtung abwärts versetzt, und zwar soweit, bis er außerhalb des Förder- bzw. Transportwegs des Tragrahmens bzw. Skids 2 angeordnet ist. Durch die Anschlagwand 22 der Führungsbahn 16 wird verhindert, dass der Mitnehmerzapfen 15 des Anschlags 10 die Führungsbahn 16 des Stellglieds 17 verlässt.

Die Ruhestellung des Anschlags 10 bzw. der Stoppereinrichtung 9 ist in FIG 9 dargestellt.

An seinem dem Stellkolben 24 abgewandten Ende ist der Fluidzylinder 23 verschwenkbar am Fertigungsstraßenabschnitt 1 gehaltert.

Der Anschlag 10 weist, wie sich insbesondere aus FIG 6 und aus den FIGUREN 9 bis 11 ergibt, einen sich in Vertikalrichtung über die Mitnehmerzapfen 15 erstreckenden Vorsprungabschnitt 26 auf, an dessen distalem Endabschnitt in Betriebsstellung des Anschlags 10 bzw. der Stoppereinrichtung 9 ein Stoßdämpfer 27 angeordnet ist.

Wenn der Anschlag 10 durch Aufprall der Vorderseite der Quertraverse 7 eines ungewollt bewegten Tragrahmens bzw. Skids 2 um die in den Führungsbahnen 16 des Stellglieds 17 befindlichen Mitnehmerzapfen 15 geschwenkt wird, gerät das distale Ende des Vorsprungabschnitts 26 des Anschlags 10 in Anlage an den Stoßdämpfer 27, wodurch die Schwenkbewegung des Anschlags 10 und damit die Vorwärtsbewegung des Tragrahmens bzw. Skids 2 in Förderrichtung 12 dämpfend abgebremst wird. Des weiteren kann bei einem Aufprall der Vorderseite der Quertraverse 7 eine Versetzung der Mitnehmerzapfen 15 des Anschlags 10 innerhalb der Führungsbahnen 16 des Stellglieds 17 erfolgen.

Außerdem ist der Anschlag 10 unterhalb des Anschlagpuffers 19 und oberhalb seiner Mitnehmerzapfen 15 mit einem mechanischen Endschalter 28 versehen, mittels dem die Bewegung des Anschlags 10 beim Aufprall der Quertraverse 7 des Tragrahmens bzw. Skids 2 im erlaubten Bereich gehalten werden kann. Der Anschlag 10 weist ein Eingriffsteil 29 auf, welches bei einer Verstellung des Anschlags 10 aus der in FIG 9 gezeigten Ruhestellung in die in den FIGUREN 10 und 11 gezeigte Betriebsstellung mit dem mechanischen Endschalter 28 in Eingriff gerät. Bei einer Verstellung des Anschlags 10 aus seiner in den FIGUREN 10 und 11 gezeigten Betriebsstellung in seine in FIG 9 gezeigte Ruhestellung wird der Eingriff zwischen dem anschlagseitigen Eingriffsteil 29 und dem mechanischen Endschalter 28 aufgehoben.

Bei dem Aufprall der Quertraverse 7 des Tragrahmens bzw. Skids 2 auf die Anschlagfläche 11 des Anschlags 10 der Stoppereinrichtung 9 wird aufgrund der Ausgestaltung des Anschlags 10 mit dem Anschlagpuffer 19, der Verschwenk- und der Versetzbarkeit des Anschlags 10 sowie der Wirkung des Stoßdämpfers 27 in Verbindung mit der des mechanischen Endschalters 28 ein sicheres Anhalten des Tragrahmens bzw. Skids gewährleistet, wobei des weiteren eine Verformung des Tragrahmens bzw. Skids 2 zuverlässig ausgeschlossen wird.

In FIG 11 ist die Position des Anschlags 10 nach einem Aufprall der Quertraverse 7 des Tragrahmens bzw. Skids 2 im Prinzip dargestellt, wobei der distale Endabschnitt des Vorsprungsabschnitts 26 des Anschlags 10 den Stoßdämpfer 27, bei dem es sich um einen pneumatischen Stoßdämpfer handeln kann, gegen dessen Vorspannkräfte zusammengedrückt hat. Die entsprechenden Rückstellkräfte des Stoßdämpfers 27 in Verbindung mit dem mechanischen Endschalter 28 führen dazu, dass der Anschlag 10 nach dem Aufprall wieder seine in FIG 10 gezeigte Betriebsstellung einnimmt.

Die Feinpositioniereinrichtung 5 des erfindungsgemäßen Fertigungsstraßenabschnitts 1 kann zweckmäßigerweise aus zwei Positioniereinheiten 30 bestehen, wobei jeweils diagonal im Bereich einer Ecke des Fertigungsabschnitts 1 eine derartige Positioniereinheit 30 vorgesehen sein kann.

Nach Beendigung des Fördervorgangs, mittels dem der Tragrahmen bzw. Skid 2 in den Fertigungsstraßenabschnitt 1 transportiert wurde, befindet sich der Tragrahmen bzw. Skid 2 bereits in einer Grobpositionierung innerhalb des Fertigungsstraßenabschnitts 1, was durch eine entsprechende Steuerung bzw. Regelung der Antriebsvorrichtung der Fördereinrichtung 3 bewerkstelligt wird.

Zur Feinpositionierung des Tragrahmens bzw. Skids 2 innerhalb des Fertigungsabschnitts 1 weist die Positioniereinheit 30 als Positionierelement einen Positionierdorn 31 auf, der auf der Oberseite 32 einer Plattform 33 der Positioniereinheit 30 angebracht ist.

Der Positionierdorn 31 hat einen in Richtung von seinem proximalen Ende zu seinem distalen Ende gleichmäßig sich reduzierenden Querschnitt.

An der Unterseite 34 der Plattform 33 der Positioniereinheit 30 sind zwei Führungszylinder 35, 36 vorgesehen, die von der Unterseite 34 in Vertikalrichtung abwärts sich erstrecken und in entsprechend angeordneten Führungsausnehmungen eines Führungsblocks 37 der Positioniereinheit 30 aufgenommen sind. Der Führungsblock 37 ist räumlich in geeigneter Weise am Fertigungsstraßenabschnitt 1 fixiert.

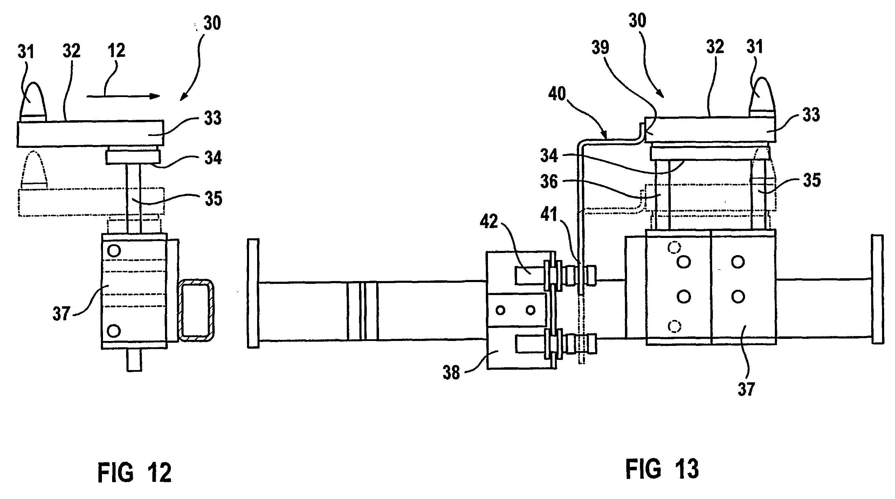

Die Plattform 33 und mit ihr der Positionierdorn 31 der Positioniereinheit 30 sind - geführt durch die Führungszylinder 35, 36 - in bezug auf den Führungsblock 37 der Positioniereinheit 30 zwischen einer in den FIGUREN 12 und 13 gestrichelt dargestellten Ruhestellung und einer in den FIGUREN 12 und 13 durchgezogen dargestellten Betriebsstellung verstellbar.

Bei einer Verstellung der Plattform 33 aus der Ruhestellung der Positioniereinheit 30 in deren Betriebsstellung gerät der Positionierdorn 31 in Eingriff mit der Positionierausnehmung 8 in der Quertraverse 7 des Tragrahmens bzw. Skids 2. Da der Durchmesser des Positionierdorns 31 an seinem distalen Ende geringer ist als der Durchmesser der Positionierausnehmung 8 der Quertraverse 7 des Tragrahmens bzw. Skids 2, findet eine exakte Ausrichtung des Tragrahmens bzw. Skids 2 in bezug auf den Führungsblock 37 und damit in bezug auf den Fertigungsstraßenabschnitt 1 statt, während der Positionierdorn 31 innerhalb der Positionierausnehmung 8 der Querstraverse 7 des Tragrahmens bzw. Skids 2 aufwärts wandert, da der Querschnitt des Positionierdorns 31 an dessen proximalem Ende dem Querschnitt der Positionierausnehmung 8 der Quertraverse 7 des Tragrahmens bzw. Skids 2 entspricht.

Zur Kontrolle der Endlagen der Positioniereinheit 30 ist an einer Längsseite der Plattform 33 der Positioniereinheit 30 zweckmäßigerweise ein Winkelanschlag 40 angebracht, dessen freier Endabschnitt 41 so ausgebildet ist, dass ein berührungsloser Endschalter 42 diesen Endabschnitt 41 sicher erkennt und eine Meldung an eine externe Steuerung signalisiert.

## Patentansprüche

1. Fertigungsstraßenabschnitt (1) mit einer Fördereinrichtung (3), mittels der ein Tragrahmen bzw. Skid (2) in Förderrichtung (12) durch den Fertigungsstraßenabschnitt (1) förderbar ist, einer Hub/Senkeinrichtung (4), mittels der der im Fertigungsstraßenabschnitt (1) befindliche Tragrahmen bzw. Skid (2) in Vertikalrichtung verstellbar ist, und einer Feinpositioniereinrichtung (5), mittels der der Tragrahmen bzw. Skid (2) an der Hub/Senkeinrichtung (4) positionierbar ist, **gekennzeichnet durch** eine Stoppereinrichtung (9), die zwischen einer Ruhestellung, in der der Tragrahmen bzw. Skid (2) in Förderrichtung (12) des Fertigungsstraßenabschnitts (1) förderbar ist, und einer Betriebsstellung verstellbar ist, in der eine Bewegung des Tragrahmens bzw. Skids (2) in Förderrichtung (12) des Fertigungsstraßenabschnitts (1) blockiert ist.

2. Fertigungsstraßenabschnitt (1) nach Anspruch 1, bei dem die Stoppereinrichtung (9) einen Anschlag (10) aufweist, der in Betriebsstellung der Stoppereinrichtung (9) in den Förderweg des Tragrahmens bzw. Skids (2) durch den Fertigungsstraßenabschnitt (1) vorragt und in Ruhestellung der Stoppereinrichtung (9) außerhalb des Förderwegs angeordnet ist.

3. Fertigungsstraßenabschnitt (1) nach Anspruch 2, bei dem die Stoppereinrichtung (9) am in Förderrichtung (12) des Tragrahmens bzw. Skids (2) durch den Fertigungsstraßenabschnitt (1) stromabwärtigen Endabschnitt (13) des Fertigungsstraßenabschnitts (1) angeordnet ist.

4. Fertigungsstraßenabschnitt (1) nach Anspruch 2 oder 3, bei dem der Anschlag (10) der Stoppereinrichtung (9) zwischen seiner Betriebsstellung und seiner Ruhestellung in Vertikalrichtung bewegbar ist.

5. Fertigungsstraßenabschnitt (1) nach einem der Ansprüche 2 bis 4, bei dem der Anschlag (10) auf seiner Anschlagfläche (11) zumindest einen Anschlagpuffer (19) aufweist.

6. Fertigungsstraßenabschnitt (1) nach Anspruch 5, bei dem der Anschlagpuffer (19) einen Verbindungsabschnitt, vorzugsweise einen Gewindeschaft (20), aufweist, der in einem anschlagseitigen Verbindungsmittel, vorzugsweise einer Gewindeausnehmung (21), fixierbar ist.

7. Fertigungsstraßenabschnitt (1) nach einem der Ansprüche 2 bis 6, bei dem der Anschlag (10) auf zumindest einer, vorzugsweise beiden Seitenflächen (14), einen seitlich vorragenden Mitnehmerzapfen (15) aufweist, der an einem Stellglied (17) anliegt, mittels dem der Anschlag (10) zwischen seiner Ruhe- und seiner Betriebsstellung verstellbar ist.

8. Fertigungsstraßenabschnitt (1) nach Anspruch 7, bei dem das Stellglied (17) um einen Schwenkbolzen (18) zwischen seiner der Ruhestellung des Anschlags (10) und seiner der Betriebsstellung des Anschlags (10) entsprechenden Position verschwenkbar ist.

9. Fertigungsstraßenabschnitt (1) nach einem der Ansprüche 2 bis 8, bei dem die Stoppereinrichtung (9) ein Antriebsglied (23) aufweist, mittels dem der Anschlag (10) zwischen seiner Ruhe- und seiner Betriebsstellung verstellbar ist.

10. Fertigungsstraßenabschnitt (1) nach Anspruch 9, bei dem das Antriebsglied (23) der Stoppereinrichtung (9) als doppelt wirkender Fluidzylinder (23) ausgebildet ist.

11. Fertigungsstraßenabschnitt (1) nach Anspruch 10, bei dem der Fluidzylinder (23) einen Stellkolben (24) aufweist, der an seinem freien Ende mit dem Stellglied (17) der Stoppereinrichtung (9) verbunden ist.

12. Fertigungsstraßenabschnitt (1) nach Anspruch 11, bei dem das freie Ende des Stellkolbens (24) des Fluidzylinders (23) verschwenkbar mit einem Ende eines Kurbelhebels (25) verbunden ist, der an seinem anderen Ende fest mit dem Stellglied (17) verbunden und verschwenkbar um den Schwenkbolzen (18) gelagert ist.

13. Fertigungsstraßenabschnitt (1) nach Anspruch 11 oder 12, bei dem der Fluidzylinder (23) an seinem seinem Stellkolben (24) abgewandten Ende verschwenkbar gelagert ist.

14. Fertigungsstraßenabschnitt (1) nach einem der Ansprüche 7 bis 13, bei dem jeder Mitnehmerzapfen (15) des Anschlags (10) in einer ihm zugeordneten, sich in Betriebsstellung des Anschlags (10) in Förderrichtung (12) des Fertigungsstraßenabschnitts (1) erstreckenden Führungsbahn (16) des Stellglieds (17) aufgenommen ist, wobei der Anschlag (10) um den bzw. die in der Führungsbahn (16) bzw. den Führungsbahnen (16) befindlichen Mitnehmerzapfen (15) schwenkbar und in Längsrichtung der Führungsbahn (16) bzw. Führungsbahnen (16) verschieblich ist.

15. Fertigungsstraßenabschnitt (1) nach Anspruch 14, bei dem jede Führungsbahn (16) an ihrem in Förderrichtung (12) des Fertigungsstraßenabschnitts (1) stromabwärtigen Ende eine Anschlagwand (22) aufweist.

16. Fertigungsstraßenabschnitt (1) nach einem der Ansprüche 7 bis 15, bei dem die Stoppereinrichtung (9) einen Stoßdämpfer (27) aufweist, mittels dem einer Schwenkbewegung des Anschlags (10) um dessen Mitnehmerzapfen (15), die bei einem Aufprall eines Tragrahmens bzw. Skids (2) gegen den Anschlag (10) entsteht, entgegenwirkbar ist.

17. Fertigungsstraßenabschnitt (1) nach Anspruch 16, bei dem der Stoßdämpfer (27) der Stoppereinrichtung (9) an einem mitnehmerzapfenfernen Endabschnitt eines sich über den bzw. die Mitnehmerzapfen (15) des Anschlags (10) erstreckenden Vorsprungsabschnitts (26) des Anschlags (10) angeordnet ist.

18. Fertigungsstraßenabschnitt (1) nach Anspruch 16 oder 17, bei dem der Stoßdämpfer (27) der Stoppereinrichtung (9) als pneumatischer Stoßdämpfer (27) ausgebildet ist.

19. Fertigungsstraßenabschnitt (1) nach einem der Ansprüche 2 bis 18, bei dem die Stoppereinrichtung (9) einen Endschalter (28) aufweist, der bei einer Verstellung des Anschlags (10) aus dessen Ruhe- in dessen Betriebsstellung mit einem anschlagseitigen Eingriffsteil (29) in Eingriff bringbar und mittels dem eine Verschwenkung und eine Verschiebung des Anschlags (10) begrenzbar sind.

20. Fertigungsstraßenabschnitt (1) nach einem der Ansprüche 1 bis 19, dessen Feinpositioniereinrichtung (5) zumindest eine Positioniereinheit (30) aufweist, die in einer festen räumlichen Anordnung am Fertigungsstraßenabschnitt (1) vorgesehen ist und ein Positionierelement (6) aufweist, das zwischen einer Betriebsstellung, in der es mit dem im Fertigungsstraßenabschnitt (1) befindlichen Tragrahmen bzw. Skid (2) in Eingriff ist, und einer Ruhestellung, in der es außer Eingriff mit dem im Fertigungsstraßenabschnitt (1) befindlichen Tragrahmen bzw. Skid (2) ist, verstellbar ist.

21. Fertigungsstraßenabschnitt (1) nach Anspruch 20, bei dem das Positionierelement (6) als Positionierdorn (31) mit einem sich in Richtung auf sein freies Ende gleichmäßig verkleinernden Querschnitt ausgebildet ist.

22. Fertigungsstraßenabschnitt (1) nach Anspruch 21, bei dem der Positionierdorn (31) an seinem proximalen Endabschnitt einen Querschnitt aufweist, der dem Querschnitt einer Positionierausnehmung (8) des Tragrahmens bzw. Skids (2) entspricht, mit der der Positionierdorn (31) bei seiner Verstellung aus seiner Ruhe- in seine Betriebsstellung in Eingriff bringbar ist.

23. Fertigungsstraßenabschnitt (1) nach Anspruch 21 oder 22, bei der der Positionierdorn (31) auf der Oberseite (32) einer Plattform (33) angeordnet ist, die ihrerseits zwischen der Betriebs- und der Ruhestellung der Positioniereinheit (30) verstellbar ist.

24. Fertigungsstraßenabschnitt (1) nach Anspruch 23, bei dem auf der Unterseite (34) der Plattform (33) der Positioniereinheit (30) vorzugsweise zwei Führungszylinder (35, 36) angeordnet sind, die sich in Vertikalrichtung erstrecken und in einem am Fertigungsstraßenabschnitt (1) fixierten Führungsblock (37) geführt sind.

25. Fertigungsstraßenabschnitt (1) nach Anspruch 23 oder 24, bei dem an einer Längsseite (39) der Plattform (33) der Positioniereinheit (30) ein Winkelanschlag (40) angebracht ist, dessen freier Endabschnitt (41) so ausgebildet ist, dass ein berührungsloser Endschalter (42) die Endlage sicher erkennt.

26. Fertigungsstraßenabschnitt (1) nach einem der Ansprüche 20 bis 25, bei dem die Feinpositioniereinrichtung (5) mehrere, vorzugsweise zwei, Positioniereinheiten (30) aufweist.

27. Fertigungsstraßenabschnitt (1) nach Anspruch 26, bei dem jeweils eine Positioniereinheit (30) diagonal im Bereich einer Ecke des Fertigungsstraßenabschnitts (1) angeordnet ist.

## Claims

1. Production line section (1) having a conveying device (3), by means of which a supporting frame or skid (2) can be transported (12) through the production line section (1), a lifting lifting/lowering device (4), by means of which the supporting frame or skid (2) present in the production line section (1) can be moved in the vertical direction, and a fine positioning device (5), by means of which the supporting frame or skid (2) can be positioned on the lifting/lowering device (4),
**characterised by** a stopper device (9) which can be moved between an OFF position in which the supporting frame or skid (2) can be transported in the conveying direction (12) of the production line section (1), and an ON position in which any movement of the supporting frame or skid (2) in the conveying direction (12) of the production line section (1) is blocked.

2. Production line section (1) according to Claim 1, wherein the stopper device (9) has a dog (10) which, in the ON position of the stopper device (9), protrudes through the production line section (1) into the conveying path of the supporting frame or skid (2) and, in the OFF position of the stopper device (9), is disposed outside the conveying path.

3. Production line section (1) according to Claim 2, wherein the stopper device (9) is disposed on the downstream end section (13) of the production line section (1) in the conveying direction (12) of the supporting frame or skid (2) through the production line section (1).

4. Production line section (1) according to Claim 2 or 3, wherein the dog (10) of the stopper device (9) can be moved in the vertical direction between its ON position and its OFF position.

5. Production line section (1) according to one of Claims 2 to 4, wherein the dog (10) has at least one buffer pad (19) on its striking surface (11).

6. Production line section (1) according to Claim 5, wherein the buffer pad (19) has a connecting section, preferably a threaded shaft (20), which can be fixed in a striking-side connecting means, preferably a threaded recess (21).

7. Production line section (1) according to one of Claims 2 to 6, wherein, on at least one but preferably two side faces (14), the dog (10) has a laterally protruding driving pin (15) which bears on an actuator (17), by means of which the dog (10) can be moved between its OFF and its ON position.

8. Production line section (1) according to Claim 7, wherein the actuator (17) is pivotable about a swivel bolt (18) between its position corresponding to the OFF position of the dog (10) and its position corresponding to the ON position of the dog (10).

9. Production line section (1) according to one of Claims 2 to 8, wherein the stopper device (9) has a driving member (23), by means of which the dog (10) can be moved between its OFF and its ON position.

10. Production line section (1) according to Claim 9, wherein the driving member (23) of the stopper device (9) is implemented as a dual-stroke fluid cylinder (23).

11. Production line section (1) according to Claim 10, wherein the fluid cylinder (23) has an adjusting piston (24) which is connected by its free end to the actuator (17) of the stopper device (9).

12. Production line section (1) according to Claim 11, wherein the free end of the adjustment piston (24) of the fluid cylinder (23) is pivotably connected to one end of a crank lever (25) which is rigidly connected by its other end to the actuator (17) and pivotably mounted about the swivel bolt (18).

13. Production line section (1) according to Claim 11 or 12, wherein the fluid cylinder (23) is pivotably mounted at its end facing away from the adjusting piston (24).

14. Production line section (1) according to one of Claims 7 to 13, wherein, in the ON position of the dog (10), each driving pin (15) of the dog (10) is accommodated in a thereto assigned guideway (16) of the actuator (17), said guideway extending in the conveying direction (12) of the production line section (1), and the dog (10) being pivotable about the driving pin or pins (15) present in the guideway (16) or guideways (16) and displaceable in the longitudinal direction of the guideway (16) or guideways (16).

15. Production line section (1) according to Claim 14, wherein each guideway (16) has a stop wall (22) at its downstream end in the conveying direction (12) of the production line section (1).

16. Production line section (1) according to one of Claims 7 to 15, wherein the stopper device (9) has a shock absorber (27), by means of which there can be counteracted any pivoting movement of the dog (10) about its driving pin (15), said movement being produced by an impact of the support frame or skid (2) against the dog (10).

17. Production line section (1) according to Claim 16, wherein the shock absorber (27) of the stopper device (9) is disposed on a distal end section, relative to the driving pin(s), of a projecting section (26) of the dog (10) extending beyond the driving pin or driving pins (15) of the dog (10).

18. Production line section (1) according to Claim 16 or 17, wherein the shock absorber (27) of the stopper device (9) is implemented as a pneumatic shock absorber (27).

19. Production line section (1) according to one of Claims 2 to 18, wherein the stopper device (9) has a limit switch (28) which, when the dog is moved (10) from its OFF to its ON position, can be brought into engagement with an engaging part (29) on the dog and by means of which any pivoting or displacement of the dog (10) can be limited.

20. Production line section (1) according to one of Claims 1 to 19, whose fine positioning device (5) has at least one positioning unit (30) which is provided in a fixed spatial arrangement on the production line section (1) and has a positioning element (6) which can be moved between an ON position, in which it is in engagement with a supporting frame or skid (2) present in the production line section (1), and an OFF position, in which it is disengaged from a supporting frame or skid (2) present in the production line section (1).

21. Production line section (1) according to Claim 20, wherein the positioning element (6) is implemented as a positioning mandrel (31) having an evenly reducing cross-section in the direction of its free end.

22. Production line section (1) according to Claim 21, wherein the positioning mandrel (31) has, at its proximal end section, a cross-section corresponding to that of a positioning recess (8) of the supporting frame or skid (2), with which recess the positioning mandrel (31) can be brought into engagement when it is moved from its OFF to its ON position.

23. Production line section (1) according to Claim 21 or 22, wherein the positioning mandrel (31) is disposed on the top side (32) of a platform (33) which can in turn be moved between the ON and the OFF position of the positioning unit (30).

24. Production line section (1) according to Claim 23, wherein on the underside (34) of the platform (33) of the positioning unit (30) there can preferably be disposed two guide cylinders (35, 36) extending in the vertical direction and guided in a guide block (37) fixed to the production line section (1).

25. Production line section (1) according to Claim 23 or 24, wherein there is mounted on a longitudinal side (39) of the platform (33) of the positioning unit (30) an angular stop (40) whose free end section (41) is implemented in such a way that a contactless limit switch (42) reliably detects the limit position.

26. Production line section (1) according to one of Claims 20 to 25, wherein the fine positioning device (5) has a plurality of, preferably two, positioning units (30).

27. Production line section (1) according to Claim 26, wherein a positioning unit (30) is disposed diagonally in the region of a comer of the production line section (1) in each case.

## Revendications

1. Segment de chaîne de production comportant une installation de transport (3) à l'aide de laquelle un cadre porteur ou chariot (2) peut être transporté dans le sens de transport (12) dans le segment de chaîne de production (1), une installation de levage / d'abaissement (4) à l'aide de laquelle le cadre porteur ou chariot (2) qui se trouve dans le segment de chaîne de production (1 ) peut être déplacé en direction verticale et une installation de positionnement précis (5) à l'aide de laquelle le cadre porteur ou chariot (2) peut être positionné sur l'installation de levage / d'abaissement (4), **caractérisée par** une installation d'arrêt (9) qu'on peut régler entre une position de repos où le cadre porteur ou chariot (2) peut être transporté dans le sens de transport (12) du segment de chaîne de production (1) et une position de service où un mouvement du cadre porteur ou chariot (2) dans le sens de transport (12) du segment de chaîne de production (1 ) est bloqué.

2. Segment de chaîne de production (1) selon la revendication 1, pour lequel l'installation d'arrêt (9) présente une butée (10) qui dépasse dans la trajectoire du cadre porteur ou chariot (2) dans le segment de chaîne de production (1) lorsque l'installation d'arrêt (9) est en position de service et qui est placée à l'extérieur de cette trajectoire lorsque l'installation d'arrêt (9) est en position de repos.

3. Segment de chaîne de production (1) selon la revendication 2, pour lequel l'installation d'arrêt (9) est placée à l'extrémité terminale (13) du segment de chaîne de production (1) située en aval dans le sens de transport (12) du cadre porteur ou chariot (2) dans le segment de chaîne de production (1).

4. Segment de chaîne de production (1) selon la revendication 2 ou 3, pour lequel la butée (10) de l'installation d'arrêt (9) est mobile en direction verticale entre sa position de service et sa position de repos.

5. Segment de chaîne de production (1) selon l'une des revendications 2 à 4, pour lequel la butée (10) présente au moins un tampon de butée (19) sur sa surface de butée (11).

6. Segment de chaîne de production (1) selon la revendication 5, pour lequel le tampon de butée (19) présente un segment de liaison, de préférence une tige filetée (20), qui peut être fixé dans un moyen de liaison côté butée, de préférence un creux taraudé (21).

7. Segment de chaîne de production (1) selon l'une des revendications 2 à 6, pour lequel la butée (10) présente sur au moins une des deux surfaces latérales (14), de préférence sur les deux, une cheville d'entraînement (15) qui dépasse de côté et qui s'applique sur un actionneur (17) grâce auquel la butée (10) peut être déplacée entre sa position de repos et sa position de service.

8. Segment de chaîne de production (1) selon la revendication 7, pour lequel l'actionneur (17) peut pivoter autour d'un axe de pivotement (18) entre sa position qui correspond à la position de repos de la butée (10) et celle qui correspond à la position de service de la butée (10).

9. Segment de chaîne de production (1) selon l'une des revendications 2 à 8, pour lequel l'installation d'arrêt (9) présente un organe d'entraînement (23) à l'aide duquel la butée (10) peut être déplacée entre sa position de repos et sa position de service.

10. Segment de chaîne de production (1) selon la revendication 9, pour lequel l'organe d'entraînement (23) de l'installation d'arrêt (9) est conçu en tant que vérin à fluide (23) à double action.

11. Segment de chaîne de production (1) selon la revendication 10, pour lequel le vérin à fluide (23) présente un piston de réglage (24) qui à son extrémité libre est relié à l'actionneur (17) de l'installation d'arrêt (9).

12. Segment de chaîne de production (1) selon la revendication 11, pour lequel l'extrémité libre du piston de réglage (24) du vérin à fluide (23) est reliée de façon à pouvoir pivoter à une extrémité d'un coude de manivelle (25) qui à son autre extrémité est relié à demeure à l'actionneur (17) et est monté de façon à pivoter autour de l'axe de pivotement (18).

13. Segment de chaîne de production (1) selon la revendications 11 ou 12 pour lequel le vérin à fluide (23) est monté de façon à pouvoir pivoter sur son extrémité opposée à son piston de réglage (24).

14. Segment de chaîne de production (1) selon l'une des revendications 7 à 13 pour lequel chacune des chevilles d'entraînement (15) de la butée (10) est reçue dans une voie de guidage (16) de l'actionneur (17) laquelle lui est associée et qui, lorsque la butée (10) est en position de service, s'étend dans le sens de transport (12) du segment de chaîne de production (1), la butée (10) pouvant pivoter autour de la ou des cheville(s) d'entraînement (15) qui se trouve(nt) dans la ou dans les voie(s) de guidage (16) et étant mobile en direction longitudinale de la voie de guidage (16) ou des voies de guidage (16).

15. Segment de chaîne de production (1) selon la revendication 14 pour lequel chaque voie de guidage (16) présente une paroi de butée (22) à son extrémité située en aval dans le sens de transport (12) du segment de chaîne de production (1).

16. Segment de chaîne de production (1) selon l'une des revendications 7 à 15 pour lequel l'installation d'arrêt (9) présente un amortisseur de chocs (27) à l'aide duquel il est possible d'empêcher un mouvement pivotant de la butée (10) autour de sa cheville d'entraînement (15) lequel apparaît lorsqu'un cadre porteur ou un chariot (2) heurte la butée (10).

17. Segment de chaîne de production (1) selon la revendication 16, pour lequel l'amortisseur de chocs (27) de l'installation d'arrêt (9) est disposé sur un segment terminal - éloigné de la cheville d'entraînement - d'un segment en saillie (26) de la butée (10) lequel s'étend sur la ou sur les cheville(s) d'entraînement (15) de la butée (10).

18. Segment de chaîne de production (1) selon la revendication 16 ou 17 pour lequel l'amortisseur de chocs (27) de l'installation d'arrêt (9) est conçu de façon appropriée en tant qu'amortisseur de chocs (27) pneumatique.

19. Segment de chaîne de production (1) selon l'une des revendications 2 à 18 pour lequel l'installation d'arrêt (9) présente un commutateur terminal (28) qui, lorsque la butée (10) passe de sa position de repos à sa position de service, peut être mis en contact avec une pièce d'engrènement (29) du côté butée et on peut limiter grâce à lui un pivotement et un déplacement de la butée (10).

20. Segment de chaîne de production (1) selon l'une des revendications 1 à 19, pour lequel l'installation de positionnement précis (5) présente au moins une unité de positionnement (30) qui est prévue sur le segment de chaîne de production (1 ) selon un agencement spatial fixe et qui présente un élément de positionnement (6) qui peut se déplacer entre une position de service où il est en prise avec le cadre porteur ou le chariot (1) qui se trouve dans le segment de chaîne de production (1) et une position de repos où il n'est pas en prise avec le cadre porteur ou le chariot (2) qui se trouve dans le segment de chaîne de production (1).

21. Segment de chaîne de production (1) selon la revendication 20 pour lequel l'élément de positionnement (6) est conçu en tant que mandrin de positionnement (31 ) dont la section transversale diminue régulièrement en direction de son extrémité libre.

22. Segment de chaîne de production (1) selon la revendication 21 pour lequel à son extrémité terminale proximale le mandrin de positionnement (31) présente une section transversale qui correspond à la section transversale d'un creux de positionnement (8) du cadre porteur ou chariot (2) avec lequel le mandrin de positionnement (31) peut être mis en contact lorsqu'il se déplace depuis sa position de repos dans sa position de service.

23. Segment de chaîne de production (1) selon la revendication 21 ou 22 pour lequel le mandrin de positionnement (31) est disposé sur le côté supérieur (32) d'une plateforme (33) qui pour sa part est mobile entre la position de service et la position de repos de l'unité de positionnement (30).

24. Segment de chaîne de production (1) selon la revendication 23 pour lequel sur le côté inférieur (34) de la plateforme (33) de l'unité de positionnement (30) sont de préférence disposés deux vérins de guidage (35, 36) qui s'étendent en direction verticale et qui sont guidés dans un bloc de guidage (37) fixé au segment de chaîne de production (1).

25. Segment de chaîne de production (1 ) selon la revendication 23 ou 24 pour lequel on applique sur un grand côté (39) de la plateforme (33) de l'unité de positionnement (30) une butée angulaire (40) dont l'extrémité terminale (41) libre est conçue de telle manière qu'un commutateur terminal (42) sans contact reconnaît de façon sûre cette extrémité terminale.

26. Segment de chaîne de production (1 ) selon l'une des revendications 20 à 25, pour lequel l'installation de positionnement précis (5) présente plusieurs, de préférence deux, unités de positionnement (30).

27. Segment de chaîne de production (1) selon la revendication 26, pour lequel une unité de positionnement (30) est à chaque fois placée en diagonale dans la zone d'un coin du segment de chaîne de production (1).
